# EUROPEAN PATENT APPLICATION

(11) **EP 3 330 341 A1**
(43) Date of publication of application: **06.06.2018**
(21) Application number: 16201658.8
(22) Date of filing: 01.12.2016
(51) Int. Cl.: C09K 8/52, C09K 8/60, C09K 8/68, C09K 8/88

(54) **METHOD OF FRACTURING SUBTERRANEAN FORMATIONS**

(71) Applicant: BASF SE, 67056 Ludwigshafen am Rhein (DE); BASF Corporation, Florham Park, NJ 07932 (US)
(72) Inventor: ZHOU, Jia, 77082 TX Houston (US); HARRIS, Lashaundria M., 77082 TX Houston (US); TINSLEY, Jack F., 77082 TX Houston (US); RIMASSA, Shawn, 77082 TX Houston (US); MIU, Evan Vincent, 08830 NJ Iselin (US)
(74) Representative: BASF IP Association

(57) **Abstract**

Method of fracturing subterranean formations using aqueous compositions comprising at least an aqueous base fluid, proppants, a viscosifier, and a nano/micro self-assembly surfactant complex comprising at least an alkyl polyglucoside or a modified polyalkyl glucoside, a second surfactant selected from alkoxylated alcohols and glycolipids, water and an organic solvent miscible with water.

## Description

The present invention relates to a method of fracturing subterranean formations using aqueous compositions comprising at least an aqueous base fluid, proppants, a viscosifier, and a nano/micro self-assembly surfactant complex comprising at least an alkyl polyglucoside or a modified polyalkyl glucoside, a second surfactant selected from alkoxylated alcohols and glycolipids, water and an organic solvent miscible with water.

In the oil and gas industry, hydraulic fracturing involves injecting fracturing fluid through a wellbore and into a formation under sufficiently high pressure to create fractures, thereby providing channels through which formation fluids such as oil, gas or water, can flow into the wellbore and thereafter be withdrawn. Fracturing fluids are designed to enable the initiation or extension of fractures and the simultaneous transport of suspended proppant (for example, naturally-occurring sand grains, resin-coated sand, sintered bauxite, glass beads, ultra lightweight polymer beads and the like) into the fracture to keep the fracture open when the pressure is released.

Water or hydrocarbons have been commonly used as base fluids for fracturing. While usually effective, water based fluids can be harmful to certain types of formations, and are not effective at removing excess water from a well (removing "water blocks"). The recovery and retention of the injected aqueous fluids have proven to be important parameters affecting the productivity of the pay zone. Insufficient recovery of injected aqueous fluid may significantly lower the productivity.

Therefore, it has been suggested to use chemical additives to optimize clean-up and recovery of aqueous fracturing fluids. Flowback aids are usually surfactants or cosolvents added to stimulation treatment fluids to reduce capillary pressure and remove water blocks. As the stimulation of tight gas reservoirs is becoming more important, the perceived value of these additives has grown. The flowback aid benefits production by reducing damage due to phase trapping, enhance mobilization of the oil and gas, help to increase regained permeability, and improve oil/gas recovery.

Historically, fluorosurfactants have provided a good combination of surface tension reduction and fluid recovery (L. Kalfayan, B. Haley, and Weiss "Optimizing surfactants to improve stimulation flowbackin tightgas wells", World Oil, Nov. 1, 2008). However, environmental concerns about fluorosurfactants and their potential degradation products led to the search for alternatives.

Glen Penny and John T. Pursly "Field studies of drilling and completion fluids to minimize damage and enhance gas production in unconventional reservoirs", Society of Petroleum Engineers, SPE 107844-MS, 2007 disclose the use of nonionic alcohol ethoxylates, nonylphenol ethoxylates, mixtures of methanol and fluorosurfactants and of microemulsions for drilling and completion fluids but also for fracturing processes.

Paul R. Howard, Sumitra Mukhopadhyay, Nita Moniaga, Laura Schafer, Glen Penny, and Keith Dismuke "Comparison of Flowback Aids: Understanding their capillary pressure and wetting properties", Socienty of Petroleum Engineers, SPE 122307-MS, 2009 disclose the use of linear ethoxylated alkohols, micoemulsions, amine oxides, and isoalkylalcohols as flowback aids.

P. Kaufman et al. "Critical Evaluations of Additives Used in Shale Slickwater Fracs", Society of Petroleum Engineers, SPE 119900, SPE Shale Gas Production Conference, Irving, TX disclose ethoxylated n-decanol, a microemulsion, nonyl phenol ethoxylated and ethoxylated fluorosurfactants for shale treatment to lower surface tension.

K.E. Cawiezel, A. K. Singh, P.S. Carman, J.L. Cutler, "The Selection and Optimization of a Surfactant Package to Maximize Cleanup of a High-Density Fracturing Fluid" in SPE 136812-MS, 2010, SPE Deepwater Drilling and Completions Conference, Galveston, TX disclose test methods for the selection of surfactants for recovering fracturing fluids. The paper also discloses results for several surfactants but does not disclose any details about the chemistry of such surfactants.

Mohan K. R. Panga, I. Suzylawati, P. Cheneviere, and M. Samuel "Preventive Treatment for Enhancing Water Removal from Gas Reservoirs by WettabilityAlteration*"disclose* the use of several chemicals for the improvement of the removal of water blocks in gas reservoirs. Besides fluorine based surfactants and polymers no details about the chemicals tested are provided.

US 2011/0218126 A1 discloses an environmentally, green, non-toxic composition comprising besides water at least 4 different components, namely (a) water soluble esters of low molecular weight alcohols and of low molecular organic acids, (b) oil soluble esters of low molecular weight alcohols and of high molecular weight fatty acids, (c) water soluble non-ionic surfactants from vegetable or animal sources, and (d) amphoteric surfactants derived from animal or vegetable based sources. Examples for (c) include ethoxylated and/or propoxylated alcohols such as lauryl alcohol, stearyl alcohol, oleyl alcohol or polyglucosides.

WO 2014/108350 A1 discloses a method of fracturing subterranean formations wherein the aqueous fracturing fluid comprises flowback aids dissolved in the fracturing fluid selected from the group of alkyl or alkenyl polyglucosides, carboxylated alkyl or alkenyl polyglucosides, alkoxylated branched alcohols, or esters of alkoxylated saccharides or mixtures thereof. In one embodiment solutions comprising a mixture of alkyl or alkenyl polyglucosides with branched alkoxylated alcohols are used as flowback aids.

Besides using surfactants as such it is known in the art to use microemulsions as flowback aids. Microemulsions are thermodynamically stable, isotropic mixtures of an aqueous phase and oil phase and at least one surfactant.

US 7,893,010 B2 discloses a microemulsion for treating subterranean formations comprising a solvent blend comprising n-butyl acetate and ethylene glycol monobutyl ether, a surfactant, a co-surfactant, an alcohol, and water. The surfactant may be selected from alkyl sulfates, sulfonates, carboxylates or other surfactants and the co-surfactant may be an oxalkylated alcohol.

US 2013/148760 A1 discloses a microemulsion flowback aid composition comprising (i) an oillike phase comprising at least one nonionic surfactant having an HLB of less than 9, (ii) a stabilizing agent, (iii) a water-soluble non-ionic surfactant, (iv) and additional surfactant, and (v) water.

US 9,068,108 B2 discloses a microemulsion for stimulating an oil or gas well comprising an aqueous phase, an oil continuous phase being a terpene, such as eucalyptol, a surfactant and a freezing point depression agent. The surfactants may be selected from alkyl polyglycol ethers, alkylaryl polyglycol ethers, fatty acid polyglycol esters, alkyl polyglucosides, fatty esters of glycerol, sorbitol, or pentaerythrol, amine oxides, alkyl sulfates, alkyl sulfonates, salts of carboxylic acids or poly(alkylene glycol) ether carboxylic acids, phosphoric esters, fatty amines, alkyl pyridinium or alkyl imidazolidinium salts, or amphoteric surfactants such as betaines.

US 2014/0299325 A1 discloses a method of treating a plurality of hydrocarbon producing wells using a complex nanofluid. The nanofluid comprises a first surfactant, for instance an ethoxylated alcohol, a second surfactant, selected from the group consisting of ethoxylated alkylene amines, ethoxylated alkyl amines, propoxylated alkylene amines, propoxylated alkyl amines, ethoxylated-propoxylated alkylene amines and ethoxylatedpropoxylated alkyl amines, a first solvent, a co-solvent and water.

US 2014/0367107 A1 discloses a method of treating an oil or gas well comprising injecting a microemulsion into the wellbore wherein the microemulsion comprises water, a solvent, and a surfactant. The surfactant may be selected from alkylglycol or alkylpolyglucoside surfactants, or mixtures thereof.

US 9,222,013 B1 discloses a well treatment microemulsion having an internal aqueous phase and an external oil phase, an emulsifying surfactant having an HLB between 10 and 18 and an alcohol.

Subterranean, oil bearing formations typically comprise -besides oil- formation water which comprises salts. Well treatment fluids injected into the formation come into contact and eventually mix with formation water. Furthermore, it is known in the art to used produced formation water for making well treatment fluids. On off-shore sites seawater may be used to make injection fluids. Furthermore, it may be necessary to add KCl to well treatment fluids, in particular to well treatment fluids for treating formations comprising clay. KCl is a very common clay stabilizer, i.e. a compound which inhibits or at least minimizes swelling of clay.

It was the goal of the present invention to formulate additive packages for adding to fracturing fluids which provide strong surface and interfacial tension reduction to minimize reservoir damage, in particular in saline environments.

Correspondingly, a method of fracturing a subterranean formation penetrated by a wellbore has been found, comprising at least the steps of
(1) formulating an aqueous fracturing fluid, comprising at least
   - an aqueous base fluid,
   - a proppant,
   - a viscosifier, and
   - a flowback aid,
(2) pumping the fracturing fluid down the wellbore at a rate and pressure sufficient to flow into the formation and to initiate or extend fractures in the formation,
(3) reducing the applied pressure thereby allowing at least a portion of the injected fracturing fluid to flow back from the formation into the wellbore, and
(4) removing such flowed back fracturing fluid from the wellbore,
   wherein the flowback aid is a nano/micro self-assembly surfactant complex comprising at least
   (A) at least one surfactant (A), selected from the group of
      (A1) alkyl or alkenyl polyglucosides having the general formula R¹O[G]ₚ (I), wherein R¹ is an alkyl or alkenyl radical having from 10 to 22 carbon atoms, G is a sugar unit having 5 or 6 carbon atoms and p is a number from 1 to 10, and
      (A2) carboxylated alkyl or alkenyl polyglucosides having the general formula R¹O[G]ₚ(-R²-COOM)_{q} (II), wherein R¹, G and p have the meaning as mentioned above, q is a number from 1 to 3, M is H or an alkali metal ion and R² is a spacer group,
   (B) at least one surfactant (B), selected from the group of
      (B1) alkoxylated alcohols having the general formula R³-O-(CH₂-CH(R⁴)-O)ₙ-H (III), wherein R³ is a unbranched or branched alkyl radical having from 8 to 18 carbon atoms, R⁴ is a group selected from H, methyl or ethyl, and n is a number from 4 to 30, with the proviso that at least 50 mole % of the groups R⁴ are H, and
      (B2) glycolipids,
   (C) water, and
   (D) at least one organic co-solvent miscible with water.

In one embodiment of the invention, the glycolipids (B2) are selected from rhamnolipids (B2.1) and sophorolipids (B2.2).

In one embodiment of the invention, the nano/micro self-assembly surfactant complex comprises additionally at least one organic solvent (E) having limited solubility in water, preferably s-limonene.

In another embodiment of the invention, the nano/micro self-assembly surfactant complex comprises additionally at least one zwitterionic/amphoteric surfactant (F).

With regard to the invention, the following should be stated specifically:

### Aqueous fracturing fluid

For the method according to the present invention an aqueous fracturing fluid is used which comprises at least an aqueous base fluid, a proppant, a viscosifier, and a nano/micro self-assembly surfactant complex comprising at least two different surfactants (A) and (B). The nano/micro self-assembly surfactant complex assists in removing the injected fracturing fluid from the formation after a hydraulic fracturing treatment.

### Aqueous base fluid

The aqueous base fluid for the fracturing fluid comprises water.

Besides water the aqueous formulation may also comprise organic solvents miscible with water. Examples of such solvents comprise alcohols such as ethanol, n-propanol, i-propanol or butyl diglycol. If organic solvents are present their amount should not exceed 50 % by weight with respect to the solvents present in the aqueous base fluid. In a preferred embodiment of the invention the aqueous base fluid comprises at least 70 % by weight of water with respect to the solvents present in the aqueous base fluid, more preferably at least 90 % by weight. In a further preferred embodiment of the invention only water is used as solvent in the aqueous base fluid.

The aqueous base fluid may be selected from fresh water, brine, sea water, formation water or mixtures thereof. Examples of salts which may be present in the aqueous base fluid comprise halogenides, in particular chlorides, sulfates, borates of mono- or divalent cations such as Li⁺, Na⁺, K⁺, Mg²⁺, Ca²⁺, Sr²⁺, or Ba²⁺. In embodiments of the invention, the total salinity of the aqueous base fluid may be from 0.1 % by weight to 20 % by weight relating to the aqueous base fluid.

In an embodiment, the aqueous base fluid may comprise KCl and/or ammonium chloride. KCl and/or ammonium chloride may act as clay stabilizer. The concentration of KCl and/or ammonium chloride may be from 0.1 % by weight to 10 % by weight relating to the aqueous base fluid, in particular from 0.5 % to 10 % by weight, preferably from 1 % to 8 % by weight and by the way of example from 2 to 7 % by weight.

### Proppants

The aqueous fracturing fluid furthermore comprises at least one proppant which is suspended in the aqueous fracturing fluid. Proppants are small hard particles which cause that fractures formed in course of the process do not close after removing the pressure. Suitable proppants are known to the skilled artisan. Examples of proppants include naturally-occurring sand grains, resin-coated sand, sintered bauxite, glass beads, or ultra lightweight polymer beads.

The amount of proppants in the aqueous fracturing fluid may be from 50 kg/m³ to 3500 m³/kg of the fracturing fluid, preferably from 50 kg/m³ to 1200 kg/m³ of the fracturing fluid.

### Viscosifiers

The aqueous fracturing fluid furthermore comprises at least one viscosifier for increasing the viscosity of the fracturing fluid. Suitable viscosifiers for fracturing fluids are known to the skilled artisan. Viscosifiying agents may be water-soluble, thickening polymers, low molecular components such as viscosifying surfactants or combinations thereof.

Examples of polymers comprise biopolymers or modified biopolymers such as xanthans, Scleroglucane, galactomannan gums, cellulose derivatives such as hydroxyethylcellulose, carboxyethylcellulose or carboxymethylcellulose. Examples are disclosed in US 2007/0062702 A1. Further examples comprise synthetic polymers such as poly acrylamide or copolymers comprising acrylamide units such as copolymers of acrylamide and acrylic acid, sulfonic acid groups comprising monomers or hydrophobically associating polymers. Polymers may also be used together with suitable crosslinkers.

Examples of low molecular components comprise viscosifying surfactants such as the viscoelastic surfactants disclosed in US 5,964,295 or combinations of viscosifying surfactants and polymers such as disclosed in WO 2011/012164 A1. The skilled artisan knows how to select suitable viscosifiers according to his or her needs.

### Flowback aid

The aqueous fracturing fluid used in the method of fracturing according to the invention comprises at least a flowback aid which assists removing the fracturing fluid from the formation after fracturing. According to the invention, the flowback aid is a nano/micro self-assembly surfactant complex.

### Nano/micro self-assembly surfactant complex

The nano/micro self-assembly surfactant complex comprises at least two different surfactants (A) and (B), water (C), and an organic co-solvent (D) miscible with water. It may optionally comprise at least one organic solvent having limited solubility in water (E) and/or at least one zwitterionic/amphoteric surfactant (F).

### Surfactants (A)

The surfactants (A) may be selected from surfactants (A1) and (A2). Of course a mixture of two or more different surfactants (A) may be used.

### Alk(en)yl polyglucosides (A1)

The surfactants (A1) are alkyl or alkenyl polyglucosides having the formula R¹O[G]ₚ (I).

In formula (I) R¹ G is a sugar unit having 5 or 6 carbon atoms and p is a number from 1 to 10. As sugars aldoses and/or ketoses having 5 or 6 carbon atoms may be used. Preferably G is a glucose unit. The index p in general formula (I) indicates the degree of oligomerisation (DP degree), i.e. the distribution of mono- and oligoglycosides. Whereas p for a specific molecule necessarily must always be an integer and, the value p for a certain alkyl or alkenyl oligoglycoside is an analytically determined calculated quantity which is mostly a rational number. Alk(en)yl oligoglycosides having an average degree of oligomerisation p of 1.1 to 3.0 are preferably used, more preferably such with a value p of 1.2 to 1.7.

Furthermore, in formula (I) R¹ is an alkyl or alkenyl radical having from 10 to 22 carbon atoms, preferably from 10 to 16 carbon atoms. The alkyl or alkenyl radical R¹ may be derived from primary alcohols. Typical examples are decyl alcohol, undecyl alcohol, lauryl alcohol, myristyl alcohol, cetyl alcohol, palmitoleyl alcohol, stearyl alcohol, isostearyl alcohol, oleyl alcohol, elaidyl alcohol, petroselinyl alcohol, arachyl alcohol, gadoleyl alcohol, behenyl alcohol, erucyl alcohol and technical mixtures thereof such as are formed, for example, in the hydrogenation of technical fatty acid methyl esters or in the hydrogenation of aldehydes from Roelen's oxo synthesis. Preferably, R¹ may be derived from alcohols of natural sources, e.g. alcohols gained from coconut or palm kernel oils comprising a mixture of C₁₂- and C₁₄-alcohols as the major components.

In one embodiment of the invention, a mixture of at least two different surfactants (A1) having different alkyl or alkenyl radicals R¹ from 10 to 16 carbon atoms are used. Preferably said mixture comprises at least an alkyl or alkenyl radical R¹ having 12 carbon atoms and an alkyl or alkenyl radical having 14 carbon atoms. Such mixtures may be obtained when alcohols of natural sources, e.g. alcohols gained from coconut or palm kernel oils are used.

The manufacture of alkyl or alkenyl polyglucosides is known to the skilled artisan. The may be for instance synthesized by the reaction of an alcohol, a saccharide component and acid catalysts as disclosed in US 5,003,057 or WO 2001/09153 A1. Various types of alkyl or alkenyl polyglucosides are commercially available.

### Carboxylated alk(en)nyl polyglucosides (A2)

The surfactants (A2) are carboxylated alkyl or alkenyl polyglucosides having the formula R¹O[G]ₚ(-R²-COOM)_{q} (II).

In formula (II) R¹, G and p have the meaning as mentioned above. q is a number from 1 to 3, preferably 1 or 2 and more preferable about 1. M is H or an alkali metal ion, such as for example Li, Na or K. With other words, the carboxylic group may be an acidic group -COOH or a salt thereof, for instance a -COONa group. R² is a spacer group which links the -COOM group with the sugar units and which usually comprises at least one carbon atom.

The carboxylated alkyl or alkenyl polyglucosides are obtainable by reacting alkyl or alkenyl polyglucosides of formula (I) with suitable reagents for introducing -COOM groups, for instance ω-carboxylic acids. In a preferred embodiment, the alkyl or alkenyl polyglucosides are obtainable by reacting alkyl or alkenyl polyglucosides of formula (I) with
- an α-halocarboxylic acid, preferably chloracetic acid or its sodium salt,
- an α-β-unsaturated carboxylic acid, preferably (meth)acrylic acid, or
- a cyclic carboxylic acid anhydride, preferably maleic acid anhydride or phthalic acid anhydride.

The nature of the spacer group R² depends on the agent for introducing the -COOM group. For instance, in case of using α-halocarboxylic acids, i.e. carboxylic acids having the general formula R'-CH(Hal)-COOH, wherein R' is a hydrocarbon radical and Hal is a halogen, the spacer group R² has the formula -CR'H. In one embodiment of the invention the spacer group R² is an alkylene group -(CH₂-)ₗ, wherein I is a number from 1 to 10. In a preferred embodiment the spacer group is a -CH₂- group (a methylene group). Such a spacer group is obtained, when using chloracetic acid or its sodium salt to introduce the carboxylic acid groups.

Suitable methods for making surfactants (A2) are known to the skilled artisan and for example disclosed in WO 1997/42299 A1, WO 2002/090369 A2, or WO 2004/052902 A1.

The amount of the surfactants (A) may be from 1 to 50 % by wt. relating to the total of all components of the nano/micro self-assembly surfactant complex, preferably from 5 to 45 % by. wt., more preferably from 5 to 35 % by wt..

### Surfactants (B)

Besides the surfactants (A) the nano/micro self-assembly surfactant complex contains at least one surfactant (B) selected from the group of alkoxylated alcohols (B1) and glycolipids (B2).

### Alkoxylated alcohols (B1)

The surfactants (B1) are alkoxylated unbranched or branched alcohols of the general formula R³-O-(-CH₂-CH(R⁴)-O)ₙ-H (III).

In formula (III) R³ is a linear or branched alkyl chain having from 8 to 18 carbon atoms, preferably from 10 to 18 carbon atoms.

R⁴ is a group selected from H, methyl or ethyl with the proviso that at least 50 mole % of the groups R⁴ are H, i.e. at least 50 % of the groups -CH₂-CH(R⁴)-O- are ethyleneoxy groups. If different alkoxy groups are present they may be arranged statistically or as a block. Preferably, at least 80 mole % of the R⁴ groups are H, more preferably at least 90 % and most preferably all R⁴ are H, i.e. the surfactant (B1) is an ethoxylated alcohol.

n is a number from 4 to 30, in particular from 4 to 20, preferably a number from 4 to 15 and even more preferably from 6 to 12. It goes without saying for the skilled artisan that n is an average number and therefore may be a rational number.

In case R³ is branched, R³ may have 1 branching point or more than one branching point. Branched groups R³ may be derived from Oxo alcohols or from Guerbet alcohols.

In one embodiment, a branched group R³ is derived from an oxo alcohol, for example from a C₁₁, C₁₃, or C₁₅-oxo alcohol.

Guerbet alcohols are branched alcohols known in the art and are manufactured by a Guerbet condensation of lower alcohols thus yielding alcohols branched in 2-position. In one embodiment of the invention R³ has an even number of carbon atoms and is derived from a Guerbet alcohol. Examples of such groups R³ comprise 2-ethylhexyl-, 2-propylheptyl-, 2-butyloctyl-, 2-pentylnonyl-, and 2-hexyldecyl groups. In a preferred embodiment R³ is a 2-propylheptyl group.

In a preferred embodiment the surfactants (B1) comprises H₂₇C₁₃-O-(-CH₂CH₂O)ₙ-H, wherein H₂₇C₁₃ is a branched alkyl moiety derived from an oxo-alcohol, an n is a number from 6 to 12.

### Glycolipids (B2)

The surfactants (B2) are glycolipids. Glycolipids are naturally occurring surfactants which comprise at least a carbohydrate moiety and a fatty acid moiety (the "lipid moiety"). Glycolipids differ in the nature of the carbohydrate and the lipid moiety. Examples of glycolipids comprose trehalose lipids, cellubiose lipds, rhamnose lipids, sopohose lipids, mannosylerythrol lipids, or lipomannosyl-mannitols. An overview about glyocolipids is provided in the review of "*Inès at al.,*

*Carbohydrate Research"*.

### Rhamnolipids (B2.1)

In one embodiment of the invention, the surfactants (B2) are Rhamnolipids (B2.1). Rhamnolipids are naturally occurring surfactants produced by various bacterial species comprising a rhamnose moiety and a lipid moiety derived from β-hydroxy decanoic acid or homologues thereof. Rhamnolipids may comprise one rhamnose moiety and one lipid moiety, but there are - by the way of example- also rhamnolipds comprising two rhamnose moieties and one lipid moiety, two rhamnose moieties and tow or more lipid moieties, or one rhamnose moiety and two lipid moieties. An overview about rhamnolipids is provided in the review of "Ahmad Mohammad et al., Applied Microbiology and Biotechnology 2010, 86(5), pages 1323 to 1336*"*.

### Sophorolipids (B2.2)

In another embodiment of the invention, the surfactants (B2) are sophorolipids (B2.2). Sophorolipids comprise a moiety of the disaccharide sophorose and a lipid moiety comprising one fatty acid moiety. The fatty acids are in particular C₁₆- or C₁₈-fatty acids which may be saturated or unsaturated. An overview about sophorolipds is provided in the review of *"*de Olivera et al., International Journal of Advanced Biotechnology and Research, Vol. 6(2), 2015, pp 161 - 174*"*.

### Amount and combinations of surfactants (B)

The amount of the surfactants (B) may be from 10 to 50 % by wt. relating to the total of all components of the nano/micro self-assembly surfactant complex, preferably from 15 to 45 % by. wt., more preferably from 15 to 40 % by wt..

In an embodiment of the invention the nano/micro self-assembly surfactant complex comprises at least one surfactant (B1).

In another embodiment of the invention, the nano/micro self-assembly surfactant complex comprises at least a surfactant (B1) and a surfactant (B2), preferably selected from the group of surfactants (B2.1) and (B2.2).

### Water (C) and organic co-solvents miscible with water (D)

The nano/micro self-assembly surfactant complex comprises at least two different solvents, that is to say water (C) and at least an organic co-solvent miscible with water (D).

The water may be fresh water, brine, sea water, formation water or mixtures thereof. In one embodiment of the invention the water is fresh water.

The organic co-solvents (D) are miscible with water. Preferably, they are miscible with water at all proportions, however the minimum requirement shall be that the solubility in fresh water is at least 100 g/l, preferably at least 200 g/l. Examples of suitable organic co-solvents miscible with water (D) comprise alcohols, such as methanol, ethanol, n-propanol or i-propanol, diols such as ethylene glycol or propylene glycole or polyetherpolyols such as diethylene glycole, triethylene glycol or oligo ethylene glycols. Of course also mixtures of two or more different organic co-solvents miscible with water (D) may be used.

In a preferred embodiment, the organic co-solvent miscible with water is propylene glycol.

The amount of water (C) may be from 5 to 50 % by wt. relating to the total of all components of the nano/micro self-assembly surfactant complex preferably from 10 to 50 % by. wt., more preferably from 15 to 50% by wt..

The amount of organic co-solvent(s) miscible with water (D) may be from 1 to 30 % by wt. relating to the total of all components of the nano/micro self-assembly surfactant complex, preferably from 5 to 30 % by. wt., more preferably from 5 to 25 % by wt..

### Further components of the nano/micro self-assembly surfactant complexes

The nano/micro self-assembly surfactant complex may optionally comprise further components.

### Organic solvent (E)

In one embodiment of the invention, the nano/micro self-assembly surfactant complex comprises additionally a further organic solvent (E). Said organic may have a limited solubility in water but is no longer fully miscible with water. In on embodiment of the invention, the solubility of the organic solvent (E) in fresh water at 20°C is less than 100 g/l, preferably less than 50 g/l and for example less than 20 g/l. In order to avoid any doubts its solubility the mixture of water (C) and organic co-solvent miscible with water (D) may be larger than the solubility in water, because the organic co-solvent may function as solubility enhancer.

Preferably, the organic solvent (E) shall be s-limonene.

### Further surfactants (F)

In one embodiment of the invention, the nano/micro self-assembly surfactant complex comprises at least an additional surfactant different form surfactants (A) and (B).

In one embodiment, the additional surfactant (F) is at least one zwitterionic surfactant (F1). Such zwitterionic surfactants are also known as amphoteric surfactants. The zwitterionic/amphoteric surfactant (F1) may preferably be selected from betaines, sultaines, phospholipids, or amino propionic acids.

### Demulsifier (G)

In an embodiment of the invention, the nano/micro self-assembly surfactant complex furthermore comprises at least one demulsifier (G). Preferably, the demulsifier is a non-ionic demulsifier. Of course, a mixture of two or more demulsifiers may be used. Examples comprise polyethylenimine alkoxylates, alkoxylated alkylphenol formaldehyde resins, alkoxylated amine-modified alkylphenol formaldehyde resins, ethylene oxide/propylene oxide copolymers, cross-linked ethylene oxide/propylene oxide copolymers, alkoxylated sorbitan esters, and mixtures thereof.

In one embodiment of the invention, the demulsifier is at least one selected from the group of
(G1) alkoxylated nonyl phenol formaldehyde resins with the proviso that the ratio of formaldehyde to phenol moieties is greater than one,
(G2) alkoxylated amyl phenol formaldehyde resins with the proviso that the ratio of formaldehyde to phenol moieties is greater than one, and
(G3) alkoxylated butyl phenol formaldehyde resins with the proviso that the ratio of formaldehyde to phenol moieties is greater than one.

The amount of demulsifiers (G), in particular of the demulsifiers (G1), (G2), and (G3) is from 0.1 wt. % to 20 wt. %, preferably form 5 to 15 % by wt. relating to the total of all components of the nano/micro self-assembly surfactant complex.

### Manufacture of the nano/micro self-assembly surfactant complexes

The the nano/micro self-assembly surfactant complex may be manufactured by simply mixing the components with/without temperature assistance.

Preferred the nano/micro self-assembly surfactant complex

The following table lists preferred compositions:

| **Component** | **Amounts [% by wt.]** | **Preferred amounts [% by wt.]** |
|---|---|---|
| Surfactant(s) (A), preferably (A1) | 1 to 50 | 5 to 35 |
| Surfactant(s) (B) | 10 to 50 | 15 to 40 |
| Water (C) | 5 to 50 | 15 to 45 |
| Organic solvent miscible with water (D) | 1 to 30 | 5 to 25 |
| Demulsifier(s) (G) | 0 to 20 | 5 to 15 |

In one preferred embodiment, the the nano/micro self-assembly surfactant complex comprises at least one surfactant (A1) and at least one surfactant (B1). Preferred surfactants (A1) and (B1) have already been mentioned.

### Method of fracturing

The method of fracturing a subterranean formation according to the present invention may be applied to any subterranean formation, preferably hydrocarbon containing subterranean formations. The hydrocarbons may be oil and/or gas.

Besides oil and/or gas the formations may contain water which usually comprises salts. The salinity of the formation water may be for instance from 1,000 ppm to 230,000 ppm. Preferred range is 5,000 ppm to 230,000 ppm, and more preferred range is 10,000 ppm to 230,000 ppm.

The formations may be sandstone, carbonate or shale formations and the formation temperature may be up to 175°C.

For applying the method according to the present invention to the formation, the formation is penetrated by at least one wellbore. The wellbore may be a "fresh" wellbore drilled into the formation which needs to become prepared for oil and/or gas production. In another embodiment the wellbore may be a production well which already has been used for producing oil and/or gas but the production rate decreased and it is necessary to fracture the formation (again) in order to increase production.

The method according to the present invention comprises at least 4 process steps (1), (2), (3), and (4). The method may optionally comprise further process steps.

### Step (1)

In course of process step (1) an aqueous fracturing fluid to be used for the method of fracturing is formulated.

The aqueous fracturing fluid comprises at least an aqueous base fluid, a proppant, a viscosifier, the nano/micro self-assembly surfactant complex as described above and optionally further components. In general, the components of the fracturing fluid are mixed at the surface using conventional equipment and techniques.

In one embodiment, the nano/micro self-assembly surfactant complex may be added to aqueous base fluid to achieve the final desired concentrations. The viscosifier and optionally further components are also to the aqueous base fluid. The components may be added in any order. The fluid is then thoroughly mixed and a proppant is added. The specific composition of the aqueous fracturing fluid and the concentrations of the components used are chosen by the skilled artisan according to the needs of the frac job.

The total amount of all surfactants (A), (B), and optionally (F) used is from 0.01 % by weight to 10 % by weight, relating to the aqueous base fluid, preferably from 0.01 % to 2 % and more preferably from 0.02 % to 1 %.

### Step (2)

In course of process step (2) the fluid pumped into a wellbore at a rate and pressure sufficient to flow into the formation and to initiate or extend a fracture in the formation. In order to initiate or to extend fractures in the formation a bottomhole pressure sufficient to open a fracture in the formation is necessary. The bottomhole pressure is determined by the surface pressure produced by the surface pumping equipment and the hydrostatic pressure of the fluid column in the wellbore, less any pressure loss caused by friction. The minimum bottomhole pressure required to initiate and/or to extend fractures is determined by formation properties and therefore will vary from application to application. Methods and equipment for fracturing procedures are known to the skilled artisan. The fluid simultaneously transports suspended proppants and the proppant becomes deposited into the fractures and holds fractures open after the pressure exerted on the fracturing fluid has been released.

### Step (3)

In course of process step (3) the applied pressure is reduced thereby allowing at least a portion of the injected fracturing fluid to flow back from the formation into the wellbore. Reducing the pressure allows the fractures to close. Proppant "props" fractures open and fracturing fluid is shut in or allowed to flow back. At the surface, chokes may be used to generate a pressure differential to allow fluid to begin to flow from the formation into the well bore.

The nano/micro self-assembly surfactant complex used in the fracturing fluid significantly facilitate the removal of the fracturing fluid injected. They minimize the amount of retention of water and the amount of water trapped in the wellbore from the formation and increase the amount of fluid recovered. The addition of nano/micro self-assembly surfactant complex improves the fluid recovery and improves the regain permeability. Without wishing to be bound by theory we believe that this may be because the nano/micro self-assembly surfactant complex used according to this invention minimize capillary pressure, however, the experimental results summarized below results demonstrate that a minimized capillary pressure alone is not sufficient to explain the recovery improvement when using the nano/micro self-assembly surfactant complex in a method of fracturing but other factors also seem to be important.

### Step (4)

In course of step (4) the aqueous fracturing fluid flown back from the formation into the wellbore is removed from the wellbore. It goes without saying for the skilled artisan that the aqueous fracturing fluid recovered may no longer have exactly the same composition as he injected fluid but may be mixed with formation fluids such as oil and/or formation water.

The total amount of fluid recovered usually depends on the formation, for instance on how much water the formation adsorbs and absorbs into its structure. Additionally, fluid may be lost to the formation. By the way of example in shale formations only 10 to 30 % of the injected aqueous fracturing fluid may be recovered. The addition of the nano/micro self-assembly surfactant complex to the aqueous fracturing fluid according to the invention enhances the amount of fluid recovered compared to using a fracturing fluid in which such nano/micro self-assembly surfactant complexes are not present.

This synergistic activity between surfactants (A) and (B) when utilized at an optimal concentration for a specific well application produces a versatile treatment system capable of many simultaneous functions among which are the following:
1) Reduced surface tension / interfacial tensions in aqueous or acidic fluids to less than 30 dynes/ cm. and 0.1 - 1.0 dynes/cm. respectively. Contact angle can be made less than 90 degrees as required and wettability essentially "neutral", which are more critical issues in reservoir rock or solid substrate compatibility issues.
2) Salinity tolerance in aqueous solution with TDS of 50,000 ppm or above and multivalent cations such as calcium, magnesium, barium and iron present.
3) Provides maximum penetration, contact efficiency and dispersion of various paraffins, asphaltenes, scales, bacterial films, and concentrated gel filter-cakes, formation fines, drilling fluids, etc.
4) Allows uniform fines suspension in wellbore breakdown treatments (i.e. acidizing) to aid in solids/damage recovery and subsequently production increase and/or recovery.
5) Maximizes heavy or complex hydrocarbon (paraffins, asphaltenes, etc.) Breakdown and dissolution, when pumped with various acids, CO2, water, as well as hydrocarbon based carrier fluids.
6) Controls and maintains ideal reservoir wettability resulting in effective surface cleaning without permanent alteration to maximize subsequent treatment efficiency.
7) Retards inorganic/organic acid (i.e. HCl / Acetic) reactions and provides effective reaction kinetics control.
8) Provides an enhanced fluid loss control mechanism in fracturing and acidizing fluid systems.

The examples which follow are intended to illustrate the invention in detail:

**Table 1: Components used:**

| No. | Type | Chemical description |
|---|---|---|
| Surfactant 1 | (A1) | C₁₀₋₁₆ alkyl polyglucoside (based on D-glucopyranose, around 1.4 glucopyranose units per molecule, main components: C₁₂ and C₁₄ alkyl residues) (Glucopon® 600UP) |
| Surfactant 2 | (B1) | iC₁₃(EO)₈H, C₁₃ oxo alcohol, ethoxylated with 8 EO units (Lutensol® TDA 8) |
| Surfactant C1 | comparative | Cocamidopropyl betaine (Dehyton® PK45) |
| Organic solvent | | Propylene glycol |

### Nano/micro self-assembly surfactant complex:

The following nano/micro self-assembly surfactant complexes were formulated by mixing the components in the amounts mentioned in the following table 2 (% by wt.):

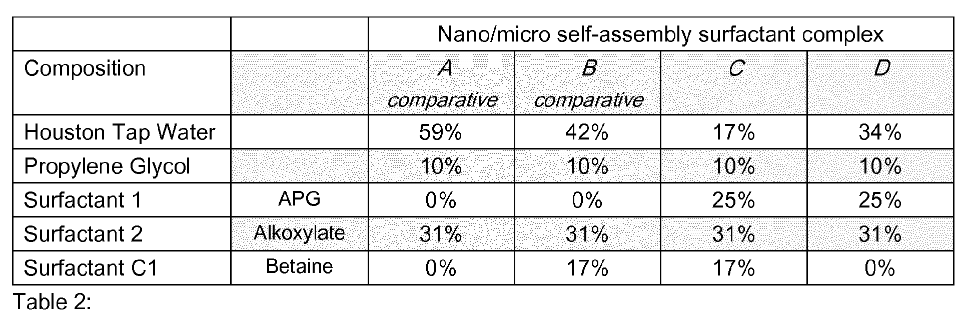

### Application tests

### Preparation of the aqueous fluids

For a first series of sand pack tests aqueous fluids were prepared by mixing the nano/micro self-assembly surfactant complexes A to D with tap water (City of Houston). A further comparative example was performed with tap water only.

For a second series of sand pack tests the nano/micro self-assembly surfactant complexes (I) to (IV) were mixed with tap water comprising 7 % by wt. of KCl (0.1 vol % of nano/micro self-assembly surfactant complex, 99.9 vol. % aqeous fluid). A further comparative example was performed with tap water comprising 7 % by. wt. of KCl only.

### Sand Pack tests:

### Packing the Sand Column

Cap the fitting on one of the column's Teflon ends.
Add 37 mL (8" column) of the test fluid to the empty column.
Slowly add 175 g (8" Column) of sand to the column via a funnel while using a vortex genie, to ensure proper packing.
Seal the column with the Teflon lid.

### Running Fluid Recovery Test

Take the packed sand column and connect to the air line on the flow meter. (Make sure the capped end of the column is on top).
Remove the fitting cap and connect the 1/4" downspout connection to the sand column.
Place a clean graduated cylinder (Use only a Plastic cylinder) on the balance. Place the cylinder so that it is directly below downspout of the column.
Tare the balance.
On the LabView data collection program set up the test information.
Select test file name.
Enter sand/mix type
Enter fluid type
Enter flow rate
Enter save rate setting. (Default is to collect data every 1 sec).
Click START on the data collection software.
After 7 seconds have elapsed, open nitrogen line to 30 psi and move valve from vent to the sand column (flow meter should already be set to desired flow rate).
Allow test to run until all fluid has been collected or less than 0.2 g fluid has been collected after 15 minutes.
Density of the fluid should be noted and then volume can be calculated.
A minimum of 4 column tests should be carried out for each fluid.

### Test results:

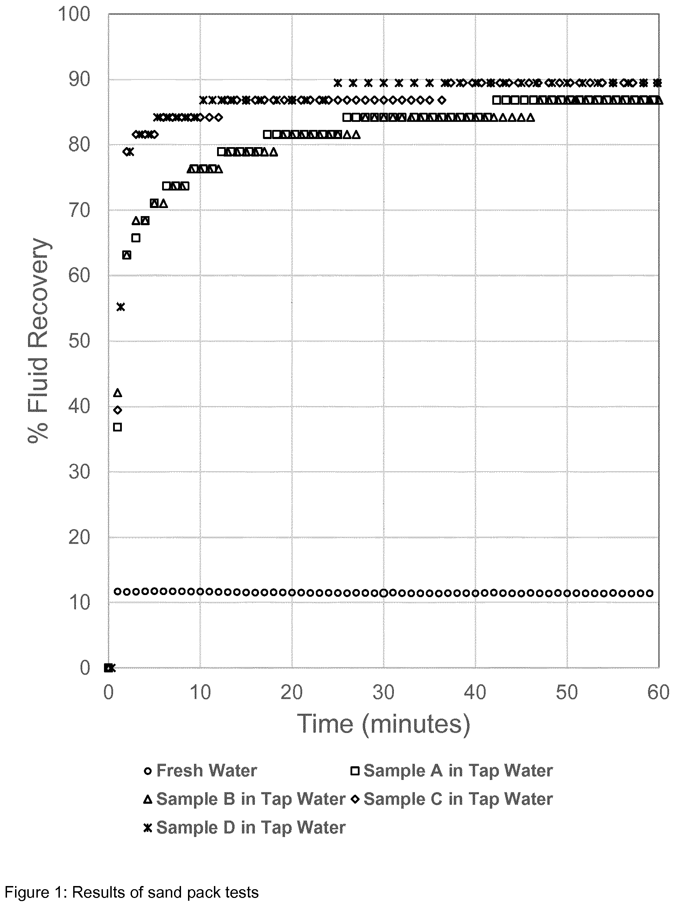

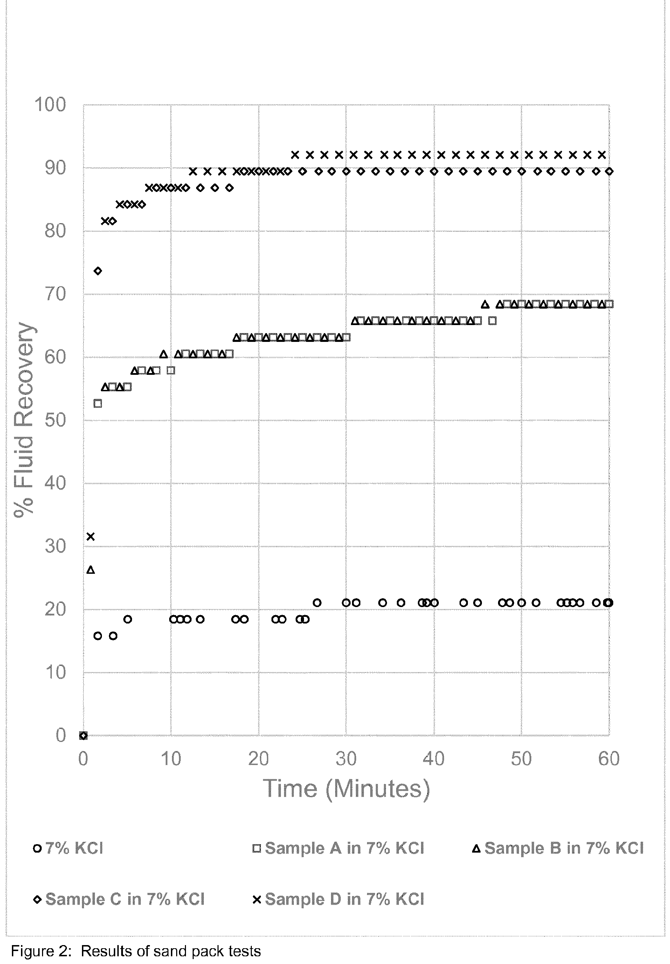

The results of the tests are summarized to figures 1 and 2.

Figure 1 shows the sand pack performance of 0.1 vol. % of the nano/micro self-assembly surfactant complexes A, B, C, and D in tap water. The fluid recovery rate is calculated by collected fluid volume divided by initial fluid volume in the sandpack. The fluids comprising nano/micro self-assembly surfactant complexes C and D according to the present invention achieve highest fluid recover in short period time. Without the surfactant (A1) (comparative nano/micro self-assembly surfactant complexes A and B used for making the fracturing fluid) the fluid recovery is lower and slower.

Figure 2 shows the fluid recovery rate of 0.1 vol. % of the nano/micro self-assembly surfactant complexes A, B, C, and D in 7% KCl. The fluids comprising the nano/micro self-assembly surfactant complexes C and D achieve highest fluid recover in short period time similar to the performance in tap water. The comparative nano/micro self-assembly surfactant complexes A and B failed to significantly improve the aqueous fluid recovery. The fluid recovery rate is much lower and slower in 7% KCl. It indicates the incorporation of surfactants (B) significantly improves the salt tolerance of overall surfactant formulation.

### Formulations comprising demulsifiers (G)

The following procedure is used to characterize the performance of an additional demulsifier used for making the nano/micro self-assembly surfactant complexes.

In summary, crude oil and water are mixed together in the presence of the nano/micro self-assembly surfactant complexes. After mixing, the samples are set to rest and are observed, while recording the rate at which the emulsion breaks.

50 mL of water and 50 mL of crude oil are placed in a prescription-type glass bottle. 100 µL of the nano/micro self-assembly surfactant complex D with the addition of a demulsifier are added to the 100 mL mixture.

A blank is also prepared (i.e. added 100 µL of nano/micro self-assembly surfactant complex D with no demulsifier). The sample is then placed in a water bath at 80 °C for 1 hour. After heating, the sample is placed on a shake table and is vigorously mixed for five minutes. Then, the sample is returned to the water bath at 80 °C, and is observed. As the emulsion breaks, the water level is recorded as a function of time. Table 3 shows the various demulsifiers that are members of groups (G1), (G2), and (G3). They are all Basorol® P DB products.

**Table 3: Demulsifier resin types tested for their ability to decrease emulsion stability**

| **Sample #** | | **Alkyl Type** |
|---|---|---|
| 1 | Basorol^{®} P DB-9429 | Nonyl Phenol |
| 2 | Basorol^{®} P DB-9934 | Nonyl Phenol |
| 3 | Basorol^{®} P DB-9935 | Nonyl Phenol |
| 4 | Basorol^{®} P DB-9945 | Butyl Phenol |
| 5 | Basorol^{®} I P DB-9946 | Nonyl Phenol |
| 6 | Basorol^{®} P DB-9947 | Nonyl Phenol |
| 7 | Basorol^{®} I P DB-9954 | Amyl Phenol |
| 8 | Basorol^{®} I P DB-9954 A | Amyl Phenol |
| 9 | Basorol^{®} P DB-9955 | Amyl Phenol |
| 10 | Basorol^{®} P DB-9958 | Amyl Phenol |

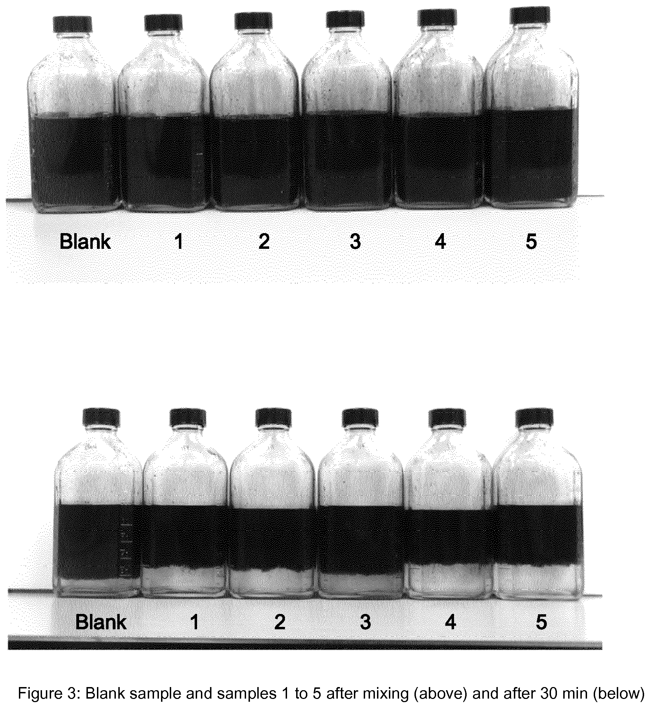

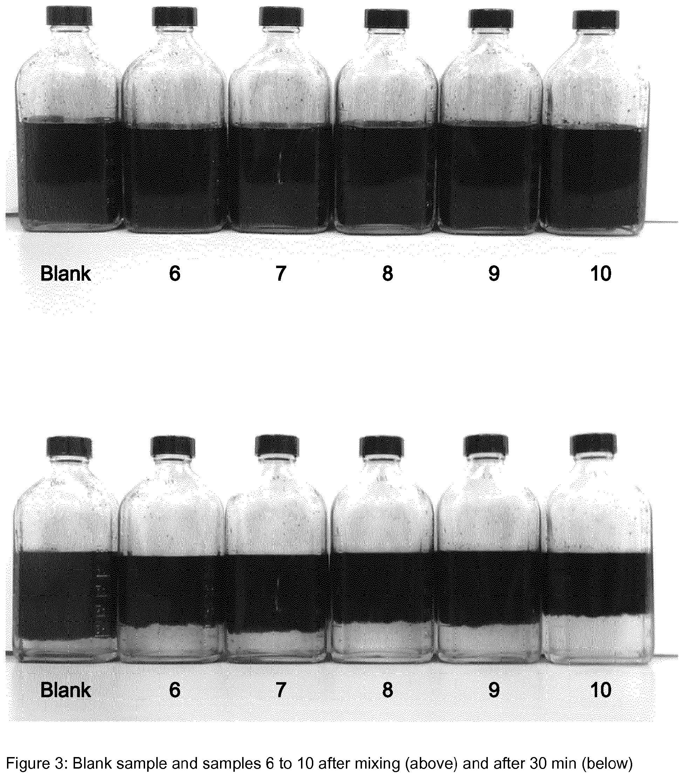

Figures 3 and 4 show images of test results for the formulations described in Table 3.

### Figure 3:

Images of the emulsion stability tests immediately after mixing and 30 minutes after mixing:
Above: Blank, then samples 1 - 5 immediately after mixing,
Below: Blank, then samples 1 - 5 thirty minutes after mixing

### Figure 4:

Above: Blank, then samples 6 - 10 immediately after mixing,
Below: Blank, then samples 6 - 10 thirty minutes after mixing.

As can be seen, each resin varies in in its ability to break the emulsion of crude oil and water; however, each does perform relatively well. Addition of the demulsifiers to aqueous fluids comprising the nano/micro self-assembly surfactant complex provides an improved emulsion breaking ability as compared to the formulation with no demulsifier.

## Claims

1. A method of fracturing a subterranean formation penetrated by a wellbore, comprising at least the steps of
(1) formulating an aqueous fracturing fluid, comprising at least
• an aqueous base fluid,
• a proppant,
• a viscosifier, and
• a flowback aid,
(2) pumping the fracturing fluid down the wellbore at a rate and pressure sufficient to flow into the formation and to initiate or extend fractures in the formation,
(3) reducing the applied pressure thereby allowing at least a portion of the injected fracturing fluid to flow back from the formation into the wellbore, and
(4) removing such flowed back fracturing fluid from the wellbore,
wherein the flowback aid is a nano/micro self-assembly surfactant complex comprising at least
(A) at least one surfactant (A), selected from the group of
(A1) alkyl or alkenyl polyglucosides having the general formula R¹O[G]ₚ (I), wherein R¹ is an alkyl or alkenyl radical having from 10 to 22 carbon atoms, G is a sugar unit having 5 or 6 carbon atoms and p is a number from 1 to 10, and
(A2) carboxylated alkyl or alkenyl polyglucosides having the general formula R¹O[G]ₚ(-R²-COOM)_{q} (II), wherein R¹, G and p have the meaning as mentioned above, q is a number from 1 to 3, M is H or an alkali metal ion and R² is a spacer group,
(B) at least one surfactant (B), selected from the group of
(B1) alkoxylated alcohols having the general formula R³-O-(CH₂-CH(R⁴)-O)ₙ-H (III), wherein R³ is a unbranched or branched alkyl radical having from 8 to 18 carbon atoms, R⁴ is a group selected from H, methyl or ethyl, and n is a number from 4 to 30, with the proviso that at least 50 mole % of the groups R⁴ are H, and
(B2) glycolipids
(C) water, and
(D) at least one organic co-solvent miscible with water.

2. Method according to claim 1, wherein the nano/micro self-assembly surfactant complex comprises additionally at least one organic solvent (E).

3. Method according to claim 2, wherein the organic solvent (E) is s-limonene.

4. Method according to any of claims 1 to 3, wherein the nano/micro self-assembly surfactant complex comprises additionally at least one additional surfactant (F) different from (A) and (B).

5. Method according to claim 4, wherein the additional surfactant (F) is an zwitterionic/amphoteric surfactant (F1).

6. Method according to claim 5, wherein the zwitterionic/amphoteric surfactant (F1) is at least one surfactant selected from the group of betaines, sultaines, phospholipids, or amino propionic acids.

7. Method according to any of claims 1 to 6, wherein the glycolipids (B2) are selected from rhamnolipids (B2.1) and sophorolipids (B2.2).

8. Method according to any of claims 1 to 6, wherein the nano/micro self-assembly surfactant complex comprises a surfactant (B1) and at least a surfactant (B2).

9. Method according to claim 8, wherein the surfactants (B2) are selected from rhamnolipids (B2.1) and sophorolipids (B2.2).

10. Method according to claim 1, wherein R¹ is is an alkyl or alkenyl radical having from 10 to 16 carbon atoms.

11. Method according claim 1, wherein a mixture of at least two different components (A1) having different alkyl or alkenyl radicals R¹ from 10 to 16 carbon atoms is used.

12. Method according to claim 11, wherein the mixture comprises at least one alkyl or alkenyl radical R¹ having 12 carbon atoms and an alkyl or alkenyl radical having 14 carbon atoms.

13. Method according to claim 1, wherein the spacer group R² is a methylene group -CH₂-.

14. Method according claim 1, wherein R³ is a branched alkyl radical having from 10 to 18 carbon atoms.

15. Method according to claim 1, wherein n is a number from 4 to 15.

16. Method according to claim 1, wherein the fracturing fluid furthermore comprises dissolved salts.

17. Method according to claim 16, wherein the amount of salts is 0.1 % by weight to 20 % by weight relating to the aqueous base fluid.

18. Method according to claim 1, wherein the fracturing fluid comprises KCl and/or ammonium chloride.

19. Method according to claim 18, wherein the amount of KCl and/or ammonium chloride is 0.1 % by weight to 10 % by weight relating to the aqueous base fluid.

20. Method according to claim 1, wherein the amount of the proppant is from 50 kg/m³ to 3500 kg/m³ of the fracturing fluid.

21. Method according to any of claims 1 to 20, wherein the nano/micro self-assembly surfactant complex comprises at least one demulsifier (G).

22. Method according to claim 21, wherein the demulsifier (G) is at least one selected from the group of
(G1) alkoxylated nonyl phenol formaldehyde resins with the proviso that the ratio of formaldehyde to phenol moieties is greater than one,
(G2) alkoxylated amyl phenol formaldehyde resins with the proviso that the ratio of formaldehyde to phenol moieties is greater than one, and
(G3) alkoxylated butyl phenol formaldehyde resins with the proviso that the ratio of formaldehyde to phenol moieties is greater than one.

23. Method according to claim 21 or 22, wherein the amount of demulsifier is from 0.1 wt. % to 20 wt. % of the nano/micro self-assembly surfactant complex.
